# EUROPEAN PATENT APPLICATION

(11) **EP 4 835 287 A1**
(43) Date of publication of application: **04.11.2026**
(21) Application number: 24911296.2
(22) Date of filing: 26.12.2024
(51) Int. Cl.: F03D 7/02

(54) **METHOD FOR SUPPRESSING BLADE VIBRATION, CONTROLLER AND WIND TURBINE GENERATOR**

(30) Priority: 27.12.2023 CN 202311822619
(71) Applicant: GOLDWIND SCIENCE & TECHNOLOGY CO., LTD., Xinjiang 830026 (CN)
(72) Inventor: LI, Yan, Beijing 100176 (CN); LI, Jian, Beijing 100176 (CN); MENG, Fanhu, Beijing 100176 (CN); ZHENG, Jirong, Beijing 100176 (CN); WANG, Jingyuan, Beijing 100176 (CN)
(74) Representative: Gulde & Partner
(86) International application number: PCT/CN2024/142614
(87) International publication number: WO 2025/140374

(57) **Abstract**

The present application relates to a method for suppressing blade vibration, a controller and a wind turbine generator. The method comprises: obtaining a first blade vibration parameter under the working condition that a wind turbine generator has a yaw fault; on the basis of the first blade vibration parameter, determining whether blades are in a pneumatic vibration state or not; in response to the blades being in the pneumatic vibration state, controlling the wind turbine generator to enter an electric operation mode, wherein in the electric operation mode, a generator of the wind turbine generator outputs electromagnetic torque to drive an impeller to rotate, so that the blades exit the pneumatic vibration state. By using the embodiments of the present application, the objectives of effectively suppressing blade vibration and avoiding blade breakage are achieved by adjusting the operation mode of the wind turbine generator, and the advantages of easy operation and high applicability are achieved.

## Description

### CROSS-REFERENCE TO RELATED APPLICATIONS

This application claims priority to Chinese patent application No. 202311822619.6, entitled "METHOD FOR SUPPRESSING BLADE VIBRATION, CONTROLLER, AND WIND TURBINE", filed on December 27, 2023, the entire contents of which are incorporated herein by reference.

### TECHNICAL FIELD

This application relates to the technical field of wind power generation, and more particularly, to a method for suppressing blade vibration, a controller, and a wind turbine.

### BACKGROUND

As wind turbine rotors become increasingly larger and blade designs become increasingly flexible under cost pressure of the wind turbine, stability control of the wind turbine in a shutdown state has become a design constraint for turbine safety. In particular, when a turbine malfunctions and is unable to perform yaw alignment with the wind, a large area of the blades falls within the stall angle of attack range. The negative aerodynamic damping makes it difficult for the vibration amplitude of the blades in the edgewise direction to attenuate. In less severe cases, this leads to cumulative blade damage and reduced design life; in more severe cases, it exceeds the blade design load boundary, resulting in blade fracture and tower collapse of the wind turbine, causing economic losses and endangering personal safety.

Currently, stability control during shutdown upon yaw failure may employ nets, canvas, or other aerodynamic appendages. However, this approach requires removal of such appendages before the turbine resumes operation, introducing engineering problems of installation and removal.

By merely adjusting the operating mode of the wind turbine, it is possible to effectively suppress blade vibration and avoid blade life damage and fracture, offering the advantages of simple operation and strong applicability.

### SUMMARY

The embodiments of the present application provide a method for suppressing blade vibration, a controller, and a wind turbine, which are capable of effectively suppressing blade vibration, avoiding blade life damage and fracture by adjusting an operating mode of the wind turbine, and offer the advantages of simple operation and strong applicability.

In a first aspect, the embodiments of the present application provide a method for suppressing blade vibration, the method comprising:
acquiring one or more first blade vibration parameters under an operating condition where a yaw fault occurs in a wind turbine;
determining whether one or more blades are in an aerodynamic vibration state based on the first blade vibration parameter; and
controlling the wind turbine to enter a motor operating mode in response to the one or more blades being in the aerodynamic vibration state,
wherein, in the motor operating mode, a generator of the wind turbine outputs electromagnetic torque to drive a rotor to rotate to enable the one or more blades to exit the aerodynamic vibration state.

In a possible implementation manner of the first aspect, the one or more first blade vibration parameters comprise: a nacelle acceleration and blade accelerations corresponding to a plurality of blades; determining whether the one or more blades are in an aerodynamic vibration state based on the one or more first blade vibration parameters comprises: determining whether a blade acceleration corresponding to any one of the one or more blades or the nacelle acceleration is greater than a corresponding first acceleration threshold; and determining that the one or more blades are in the aerodynamic vibration state in response to the one or more blade acceleration corresponding to any one of the one or more blades or the nacelle acceleration being greater than the corresponding first acceleration threshold.

In a possible implementation manner of the first aspect, the wind turbine comprises a semi-direct drive wind turbine, which comprises a first converter, the first converter being disposed between a power grid and a generator stator; and
the controlling the wind turbine to enter a motor operating mode comprises:
sequentially starting a grid-side power module and a machine-side power module of the first converter to enable the wind turbine to enter the motor operating mode.

In a possible implementation manner of the first aspect, the wind turbine comprises a doubly-fed wind turbine, which comprises a second converter, a grid-connected contactor, and a short-circuit contactor, the second converter being disposed between a power grid and a generator rotor, a moveable contact set of the grid-connected contactor being connected to the power grid, and a stationary contact set of the grid-connected contactor being respectively connected to a generator stator and a moveable contact set of the short-circuit contactor;
the controlling the wind turbine to enter a motor operating mode comprises:
closing the short-circuit contactor to disconnect an electrical connection between the power grid and the generator stator; and
sequentially starting a grid-side power module and a machine-side power module of the second converter to cause the wind turbine to enter the motor operating mode.

In a possible implementation manner of the first aspect, after the controlling the wind turbine to enter a motor operating mode, the method further comprises:
acquiring one or more second blade vibration parameter;
determining whether the one or more blades have exited the aerodynamic vibration state based on the one or more second blade vibration parameters; and
controlling the wind turbine to exit the motor operating mode in response to the one or more blades having exited the aerodynamic vibration state.

In a possible implementation manner of the first aspect, the one or more second blade vibration parameters comprise: a nacelle acceleration and blade accelerations corresponding to a plurality of the blades; the determining whether the one or more blades have exited the aerodynamic vibration state based on the one or more second blade vibration parameters comprises: determining whether the blade accelerations corresponding to all the blades and the nacelle acceleration are each less than corresponding second acceleration thresholds; and determining that the one or more blades have exited the aerodynamic vibration state in response to the blade accelerations corresponding to all the blades and the nacelle acceleration each being less than the corresponding second acceleration thresholds.

In a possible implementation manner of the first aspect, the wind turbine comprises a semi-direct drive wind turbine, which comprises a first converter disposed between a power grid and a generator stator; and
the controlling the wind turbine to exit the motor operating mode comprises:
sequentially turning off down a machine-side power module and a grid-side power module of the first converter to cause the wind turbine to exit the motor operating mode.

In a possible implementation manner of the first aspect, the wind turbine comprises a doubly-fed wind turbine, which comprises a second converter, a grid-connected contactor, and a short-circuit contactor, the second converter being disposed between a power grid and a generator rotor, a moveable contact set of the grid-connected contactor being connected to the power grid, and a stationary contact set of the grid-connected contactor being respectively connected to a generator stator and a moveable contact set of the short-circuit contactor;
the controlling the wind turbine to exit the motor operating mode comprises:
sequentially turning off a machine-side power module and a grid-side power module of the second converter, and opening the short-circuit contactor to cause the wind turbine to exit the motor operating mode.

In a second aspect, the embodiments of the present application provide a controller, the controller comprising: a processor; a memory; wherein the memory stores a computer program, which implements, when executed by the processor, the method for suppressing blade vibration as described above.

In a third aspect, the embodiments of the present application provide a computer-readable storage medium, the computer-readable storage medium storing computer instructions, the computer instructions configured to cause a computer to execute the method for suppressing blade vibration according to any one of the foregoing items.

In a fourth aspect, the embodiments of the present application provide a semi-direct drive wind turbine, the semi-direct drive wind turbine comprising: a first converter and the controller as described above, the first converter being disposed between a power grid and a generator stator.

In a fifth aspect, the embodiments of the present application provide a doubly-fed wind turbine, the doubly-fed wind turbine comprising: a second converter, a grid-connected contactor, a short-circuit contactor, and the controller as described above, wherein the second converter is disposed between a power grid and a generator rotor, a moveable contact set of the grid-connected contactor is connected to the power grid, and a stationary contact set of the grid-connected contactor is respectively connected to a generator stator and a moveable contact set of the short-circuit contactor.

As described above, in the embodiments of the present application, under an operating condition where a yaw fault occurs in a wind turbine, the first blade vibration parameter is first acquired; then it is determined whether the blades are in an aerodynamic vibration state based on the first blade vibration parameter; in response to the blades being in the aerodynamic vibration state, the wind turbine is controlled to enter the motor operating mode, and the generator outputs electromagnetic torque to drive the rotor to rotate, causing the blades to exit the aerodynamic vibration state.

That is to say, in the embodiments of the present application, when the blades are in the aerodynamic vibration state, blade vibration can be effectively suppressed and blade life damage and fracture can be avoided merely by adjusting an operating mode of the wind turbine, offering the advantages of simple operation and strong applicability.

### BRIEF DESCRIPTION OF THE DRAWINGS

The present application can be better understood from the following description of specific embodiments of the present application in conjunction with the accompanying drawings, in which identical or similar reference numerals denote identical or similar features.
FIG. 1 is a flowchart of a method for suppressing blade vibration according to an embodiment of the present application;
FIG. 2 is a flowchart of a method for suppressing blade vibration according to another embodiment of the present application;
FIG. 3 is a grid-connected topology of a semi-direct drive wind turbine in a power generation operating mode;
FIG. 4 is a grid-connected topology of a semi-direct drive wind turbine in a motor operating mode;
FIG. 5 is a grid-connected topology of a doubly-fed wind turbine in a power generation operating mode;
FIG. 6 is a grid-connected topology of a doubly-fed wind turbine in a motor operating mode;
FIG. 7 is a schematic diagram of the connection of a short-circuit contactor corresponding to a doubly-fed wind turbine;
FIG. 8 is a flowchart of a method for suppressing blade vibration according to another embodiment of the present application;
FIG. 9 is a schematic diagram of a simulation comparison of generator torque before and after activation of the motor operating mode according to an embodiment of the present application;
FIG. 10 is a schematic diagram of a simulation comparison of rotor speed, blade root load, and blade deformation before and after activation of the motor operating mode according to an embodiment of the present application.

Description of Reference Numerals:
30 - first converter; 50 - second converter; G1 - generator; G11 - generator stator;
G12 - generator rotor; G2 - gearbox; Y1 - rotor; P1 - grid-side power module;
P2 - machine-side power module; K1 - grid-connected contactor; K2 - short-circuit contactor.

### DETAILED DESCRIPTION

The features and exemplary embodiments of various aspects of the present application will be described in detail below. In the following detailed description, numerous specific details are set forth in order to provide a thorough understanding of the present application. However, it will be apparent to those skilled in the art that the present application may be practiced without some of these specific details. The description of the embodiments below is provided merely to offer a better understanding of the present application by way of illustrating examples thereof. In the drawings and the description below, at least some well-known structures and techniques are not shown so as to avoid unnecessarily obscuring the present application; and, for clarity, the dimensions of some structures may be exaggerated. Furthermore, the features, structures, or characteristics described hereinafter may be combined in any suitable manner in one or more embodiments.

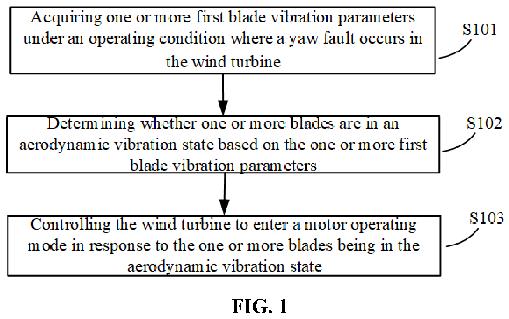

In order to better understand the present application, a method for suppressing blade vibration, a controller, and a wind turbine according to embodiments of the present application will be described in detail below with reference to FIGS. 1 to 10.

The embodiments of the present application provide a method for suppressing blade vibration, which is capable of effectively suppressing vibration of blades of a wind turbine by utilizing existing electrical configurations of the wind turbine.

As shown in FIG. 1, the method for suppressing blade vibration according to the embodiments of the present application comprises steps S101 to S103.

In step S101, one or more first blade vibration parameter is acquired under an operating condition where a yaw fault occurs in the wind turbine.

In step S102, it is determined whether the one or more blades are in an aerodynamic vibration state based on the one or more first blade vibration parameters.

The first blade vibration parameter may comprise a nacelle acceleration and blade accelerations corresponding to a plurality of blades, and acceleration sensors may be respectively installed on the nacelle and the blades to obtain corresponding acceleration data.

The blades being in the aerodynamic vibration state means that, due to the yaw fault, large portions of the blades fall within a stall angle-of-attack range, and negative aerodynamic damping generated thereby causes the blades to have a high vibration amplitude in the edgewise direction, and this vibration amplitude can be measured based on acceleration data.

By way of example, it may first be determined whether a blade acceleration corresponding to any one of the blades or nacelle acceleration is greater than a respective first acceleration threshold. In a case where the blade acceleration corresponding to any one of the blades is greater than the first acceleration threshold corresponding to the respective blade, or the nacelle acceleration is greater than the first acceleration threshold corresponding to the nacelle, it may be determined that the blades are in the aerodynamic vibration state.

Taking a wind turbine having three blades as an example, as long as an acceleration of one of the blades is greater than the corresponding acceleration threshold, or the nacelle acceleration is greater than the corresponding acceleration threshold, it indicates that the blades are in the aerodynamic vibration state, and it is necessary to suppress blade vibration in order to avoid blade life damage and fracture.

It should be noted that, since the blades and the nacelle are at different positions, the blade accelerations and the nacelle acceleration may respectively correspond to different acceleration thresholds, which need to be set according to actual conditions. That is, the above-mentioned "first acceleration threshold" is a first type of threshold for indicating that the blades enter the aerodynamic vibration state, and includes the acceleration threshold corresponding to the blade accelerations and the acceleration threshold corresponding to the nacelle acceleration.

In step S103, the wind turbine is controlled to enter a motor operating mode in response to the one or more blades being in the aerodynamic vibration state.

The motor operating mode refers to a mode in which a generator of the wind turbine receives electrical energy from the power grid and outputs electromagnetic torque to a rotor shaft.

In the motor operating mode, a generator rotor is capable of driving the rotor to rotate, breaking the aerodynamic state around the blades, interrupting a continuous energy exchange process between the blades and the air, reducing excitation received by the blades, thereby suppressing blade vibration and causing the blades to exit the aerodynamic vibration state.

As described above, in the embodiments of the present application, under the operating condition where a yaw fault occurs in the wind turbine, the first blade vibration parameter is first acquired, and then it is determined whether the blades are in the aerodynamic vibration state based on the first blade vibration parameter. When the blades are in the aerodynamic vibration state, the wind turbine is controlled to enter the motor operating mode, and the generator outputs electromagnetic torque to drive the rotor to rotate, causing the blades to exit the aerodynamic vibration state.

That is to say, in the embodiments of the present application, when the blades are in the aerodynamic vibration state, blade vibration can be effectively suppressed and blade life damage and fracture can be avoided merely by adjusting an operating mode of the wind turbine, offering the advantages of simple operation and strong applicability.

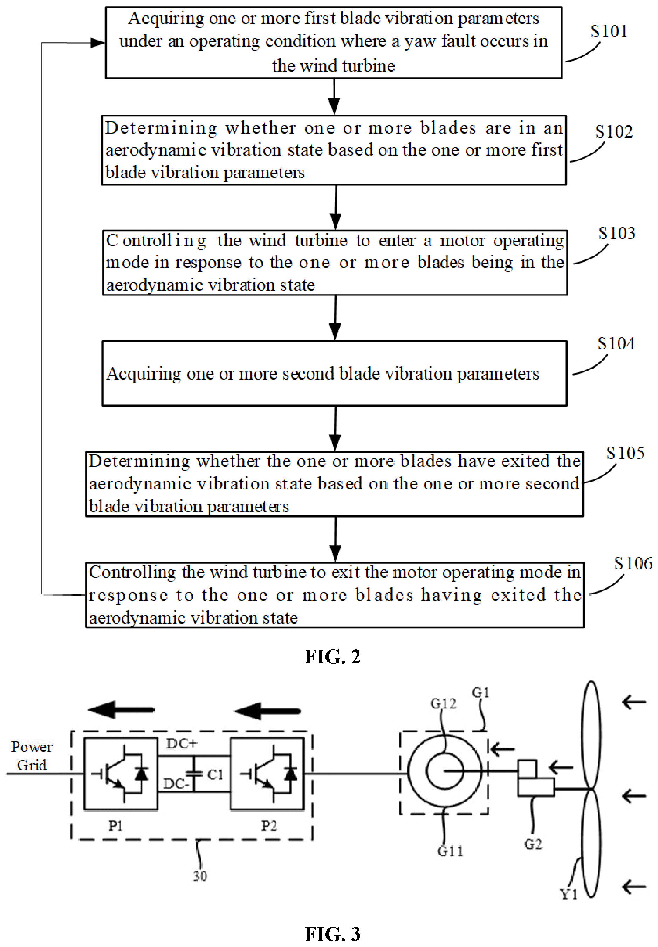

In some embodiments, as shown in FIG. 2, after controlling the wind turbine to enter the motor operating mode, the method for suppressing blade vibration may further comprise steps S104 to S106.

In step S104, one ore more second blade vibration parameters are acquired.

In step S105, it is determined whether the one or more blades have exited the aerodynamic vibration state based on the one or more second blade vibration parameters.

In step S106, in a case where the one or more blades have exited the aerodynamic vibration state, the wind turbine is controlled to exit the motor operating mode.

The second blade vibration parameter may comprise the nacelle acceleration and the blade accelerations corresponding to the plurality of blades. By way of example, it may first be determined whether the blade accelerations corresponding to all blades and the nacelle acceleration are all less than respective second acceleration thresholds. In a case where the blade accelerations corresponding to all blades and the nacelle acceleration are all less than the respective second acceleration thresholds, it is finally determined that the blades have exited the aerodynamic vibration state.

It should be noted that the above-mentioned "second acceleration threshold" is a second type of threshold for indicating that the blades exit the aerodynamic vibration state, and includes the acceleration threshold corresponding to the blade accelerations and the acceleration threshold corresponding to the nacelle acceleration.

In some embodiments, the first acceleration threshold corresponding to the blade accelerations may be made equal to the second acceleration threshold corresponding thereto, and the first acceleration threshold corresponding to the nacelle acceleration may be made equal to the second acceleration threshold corresponding thereto.

In some embodiments, the first acceleration threshold corresponding to the blade accelerations may also be made greater than the second acceleration threshold corresponding thereto, and the first acceleration threshold corresponding to the nacelle acceleration may be made greater than the second acceleration threshold corresponding thereto, so as to retain a certain control margin and reduce a switching frequency of controlling the wind turbine to enter and exit the motor operating mode.

For example, the first acceleration threshold corresponding to the blade accelerations is 1 mm/s², and the second acceleration threshold is 0.8 mm/s². When the blade accelerations are greater than 1 mm/s², it may be determined that the blades are in the aerodynamic vibration state, and the wind turbine is controlled to enter the motor operating mode. Subsequently, with rotation of the rotor, the blade accelerations gradually decrease. After the blade accelerations fall below 0.8 mm/s², it is then determined that the blades have exited the aerodynamic vibration state, and the wind turbine is controlled to exit the motor operating mode.

In the present embodiment, in a case where it is determined that the blades have exited the aerodynamic vibration state, the generator may be controlled to exit the motor operating mode so as to reduce power consumption from the power grid, and at the same time return to step S101 to monitor the first blade vibration parameter, thereby promptly detecting and effectively suppressing blade vibration and improving the safety of the wind turbine.

The method for suppressing blade vibration according to the embodiments of the present application will be described below taking a semi-direct drive wind turbine as an example.

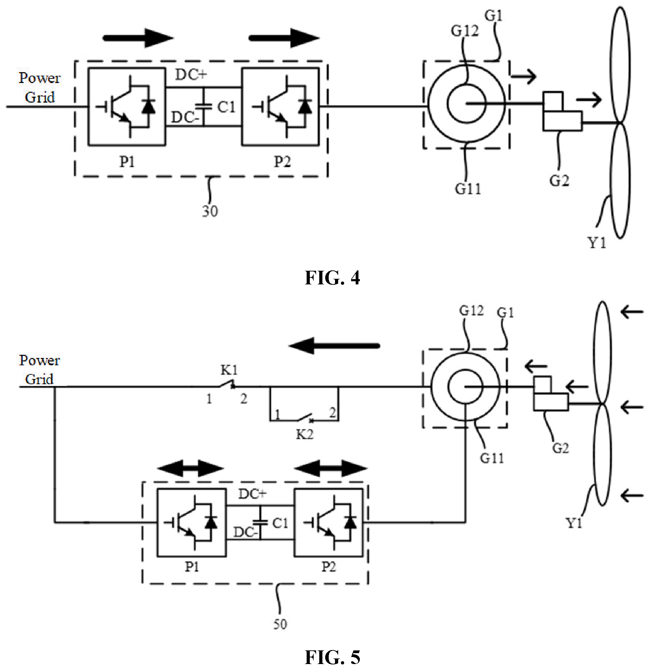

FIGS. 3 and 4 respectively show grid-connected topologies of a semi-direct drive wind turbine in a power generation operating mode and a motor operating mode. The semi-direct drive wind turbine comprises a first converter 30, which is disposed between a power grid and a generator stator G11.

Referring to FIG. 3, in the power generation operating mode of the semi-direct drive wind turbine, a rotor Y1 rotates under the action of wind energy. A rotor shaft is connected to a low-speed shaft of a gearbox G2, and after speed regulation by the gearbox G2, a high-speed shaft of the gearbox G2 drives a generator rotor to rotate. The generator stator G11 induces electrical energy, which is fed into the power grid through a machine-side power module P2 and a grid-side power module P1 of the first converter 30.

Referring to FIG. 4, in response to the blades being in an aerodynamic vibration state, by sequentially starting the grid-side power module P1 and the machine-side power module P2 of the first converter 30, electrical energy from the power grid can be transmitted to the generator stator, causing the wind turbine to enter the motor operating mode. In this mode, the generator G1 outputs electromagnetic torque to drive the rotor to rotate, causing the blades to exit the aerodynamic vibration state. Similarly, when the blades exit the aerodynamic vibration state, by sequentially turning off the machine-side power module P2 and the grid-side power module P1 of the first converter 30, the wind turbine can be caused to exit the motor operating mode.

It can be seen from the above that, in the present embodiment, for the semi-direct drive wind turbine, merely by performing corresponding starting operations on the grid-side power module P1 and the machine-side power module P2 of the first converter 30, the wind turbine can be caused to enter the motor operating mode, and the generator G1 can output electromagnetic torque to drive the rotor Y1 to rotate, causing the blades to exit the aerodynamic vibration state. Since the first converter 30 belongs to existing electrical configurations of the semi-direct drive wind turbine, the method for suppressing blade vibration according to the embodiments of the present application can achieve the purpose of effectively suppressing blade vibration merely by utilizing existing electrical configurations of the wind turbine, offering the advantages of simple operation and strong applicability.

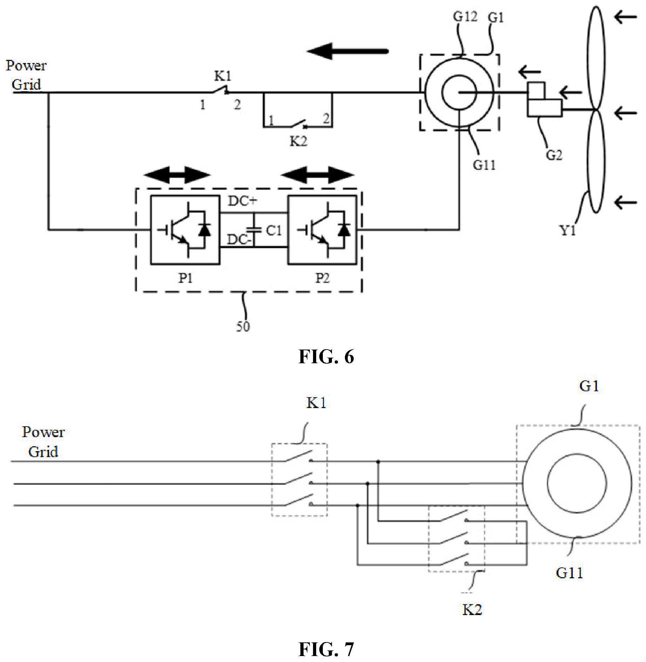

The method for suppressing blade vibration according to the embodiments of the present application will be described below taking a doubly-fed wind turbine as an example. FIGS. 5 and 6 respectively show grid-connected topologies of the doubly-fed wind turbine in a power generation operating mode and a motor operating mode.

As shown in FIGS. 5 and 6, both a generator stator G11 and a generator rotor G12 of the doubly-fed wind turbine can exchange power with the power grid. The doubly-fed wind turbine comprises a second converter 50, a grid-connected contactor K1, and a short-circuit contactor K2. The second converter 50 is disposed between the power grid and the generator rotor G12, and is used for realizing power exchange between the generator rotor G12 and the power grid. Referring to FIG. 7, a moveable contact set of the grid-connected contactor K1 is connected to the power grid, and a stationary contact set of the grid-connected contactor K1 is respectively connected to the generator stator G11 and a moveable contact set of the short-circuit contactor K2, and is used for realizing power exchange between the generator stator G11 and the power grid.

Referring to FIG. 5, in the power generation operating mode of the doubly-fed wind turbine, the grid-connected contactor K1 is in a closed state, and the short-circuit contactor K2 is in an open state. The rotor Y1 rotates under the action of wind energy. A rotor shaft is connected to a low-speed shaft of the gearbox G2, and after speed regulation by the gearbox G2, a high-speed shaft of the gearbox G2 drives the generator rotor G12 to rotate. Both the generator stator G11 and the generator rotor G12 induce electrical energy. The electrical energy induced by the generator G1 is fed into the power grid along one path directly through the generator stator G11, and along another path through the machine-side power module P2 and the grid-side power module P1 of the second converter 50.

Referring to FIG. 6, when the blades are in the aerodynamic vibration state, by first closing the short-circuit contactor K2 to disconnect an electrical connection between the power grid and the generator stator G11, and then sequentially starting the grid-side power module P1 and the machine-side power module P2 of the second converter 50, electrical energy from the power grid can be transmitted to the generator rotor G12, causing the wind turbine to enter the motor operating mode. In this mode, the generator G1 outputs electromagnetic torque to drive the rotor Y1 to rotate, causing the blades to exit the aerodynamic vibration state. Similarly, when the blades exit the aerodynamic vibration state, by sequentially turning off the machine-side power module P2 and the grid-side power module P1 of the second converter 50, and then opening the short-circuit contactor K2, the wind turbine can be caused to exit the motor operating mode.

It can be seen from the above that, in the present embodiment, for the doubly-fed wind turbine, merely by performing corresponding operations on the short-circuit contactor K2, and the grid-side power module P1 and the machine-side power module P2 of the second converter 50, the generator can be caused to enter the motor operating mode, and electromagnetic torque can be output by the generator to drive the rotor to rotate, causing the blades to exit the aerodynamic vibration state. Since the short-circuit contactor K2 and the second converter 50 belong to existing electrical configurations of the doubly-fed wind turbine, the method for suppressing blade vibration according to the embodiments of the present application can achieve the purpose of effectively suppressing blade vibration merely by utilizing existing electrical configurations of the wind turbine, offering the advantages of simple operation and strong applicability.

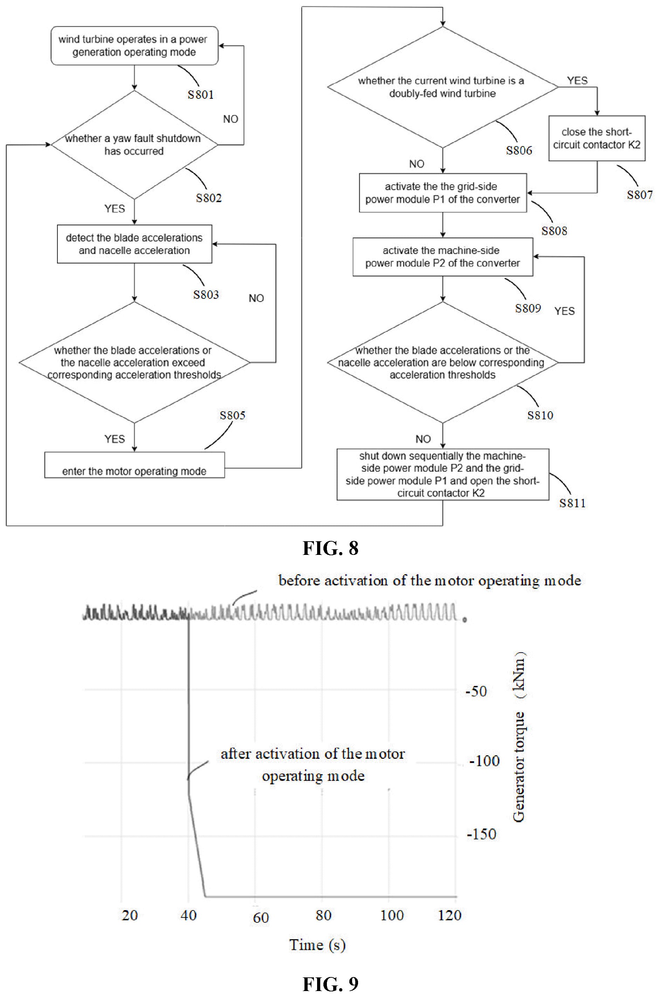

For the convenience of understanding by those skilled in the art, FIG. 8 exemplarily illustrates the method for suppressing blade vibration according to the embodiments of the present application. The flow in FIG. 8 comprises steps S801 to S811.

In step S801, the wind turbine operates in a power generation operating mode.

In step S802, it is determined whether a yaw fault shutdown has occurred; in a case where the yaw fault shutdown has occurred, the method advances to step S803; in a case where the yaw fault shutdown has not occurred, the method returns to the step S801.

In step S803, the blade accelerations and nacelle acceleration are detected.

In step S804, it is determined whether the blade accelerations or the nacelle acceleration exceed corresponding acceleration thresholds; in a case where the blade accelerations or the nacelle acceleration exceed corresponding acceleration thresholds, the method advances to step S805; in a case where the blade accelerations or the nacelle acceleration do not exceed corresponding acceleration thresholds, the method returns to the step S803.

In step S805, the motor operating mode is entered.

In step S806, it is determined whether the current wind turbine is a doubly-fed wind turbine; in a case where the current wind turbine is a doubly-fed wind turbine, the method advances to step S807; in a case where the current wind turbine is not a doubly-fed wind turbine, the method advances to step S808.

In step S807, the short-circuit contactor K2 is closed, and the method advances to step S808.

In step S808, the grid-side power module P1 of the converter is activated.

In step S809, the machine-side power module P2 of the converter is activated to drive the rotor to rotate.

In step S810, it is determined whether the blade accelerations or the nacelle acceleration are below corresponding acceleration thresholds; in a case where the blade accelerations or the nacelle acceleration are below corresponding acceleration thresholds, the method advances to step S811; in a case where case where the blade accelerations or the nacelle acceleration are not below corresponding acceleration thresholds, the method returns to the step S809.

In step S811, the machine-side power module P2 and the grid-side power module P1 are turned off sequentially, the short-circuit contactor K2 is opened, and then the method returns to the step S802.

The effect of the method for suppressing blade vibration according to the embodiments of the present application will be described below taking an offshore large-rotor high-power wind turbine as an example.

The environmental conditions are as follows: the wind speed is 30 m/s, with steady-state wind and a wind shear of 0.11.

The wind turbine is in a state where: the wind turbine has a yaw fault and cannot perform normal yaw alignment with the wind, the yaw-to-wind deviation is constant at 30°, the rotor is in a free state, and the blades are parked at a feathered position.

FIG. 9 is a schematic diagram of a simulation comparison of generator torque before and after activation of the motor operating mode;

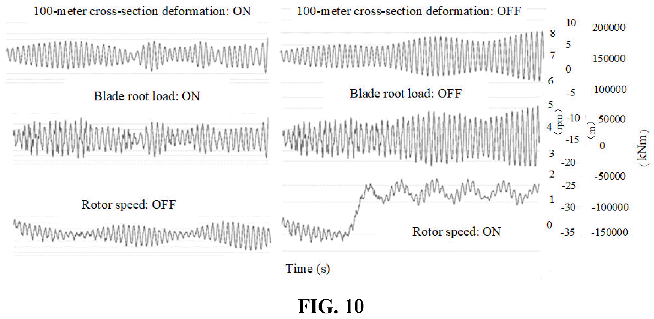

FIG. 10 is a schematic diagram of a simulation comparison of rotor speed, blade root load, and blade deformation before and after activation of the motor operating mode.

It can be seen from FIGS. 9 and 10 that, before activation of the motor operating mode, the generator torque is close to zero, the blade deformation gradually increases, the blade load gradually increases, and the rotor speed exhibits small positive and negative rotation. After activation of the motor operating mode (the trigger time shown in FIGS. 9 and 10 starts from 40s; in actual application, triggering may be performed based on data obtained by sensors for the blade accelerations and the nacelle acceleration), the generator torque is gradually increased to approximately 191 kNm (approximately 80% of the rated motor torque), the rotor speed is increased to approximately 1.5 rpm, the blade root load exhibits no divergence trend, and the blade deformation exhibits no divergent increasing trend. This indicates that activation of the motor operating mode can effectively suppress blade vibration.

The embodiments of the present application further provide a controller, comprising: a processor; a memory. The memory stores a computer program, which, when executed by the processor, implements the method for suppressing blade vibration according to any one of the foregoing items.

The embodiments of the present application further provide a computer-readable storage medium, storing computer instructions for causing a computer to execute the method for suppressing blade vibration according to any one of the foregoing items.

The embodiments of the present application further provide a semi-direct drive wind turbine. Referring to FIGS. 3 and 4, the semi-direct drive wind turbine comprises: a first converter 30 and the controller as described above; the first converter 30 is disposed between a power grid and a generator stator G11.

The embodiments of the present application further provide a doubly-fed wind turbine. Referring to FIGS. 5 and 6, the doubly-fed wind turbine comprises: a second converter 50, a grid-connected contactor K1, a short-circuit contactor K2, and the controller as described above; the second converter 50 is disposed between the power grid and a generator rotor G12; a moveable contact set of the grid-connected contactor K1 is connected to the power grid, and a stationary contact set of the grid-connected contactor K1 is respectively connected to the generator stator G11 and a moveable contact set of the short-circuit contactor K2.

It should be noted that the method for suppressing blade vibration according to the embodiments of the present application is applicable to rotor systems having different numbers of blades, and is also applicable to upwind and downwind wind turbines, and is applicable to any technical solution comprising switching from a generator mode to a motor mode to drive the rotor to rotate. Application scenarios include yaw faults where yawing cannot be performed, as well as maintenance and other scenarios where yaw alignment with the wind cannot be performed.

It is to be understood that the various embodiments in the present description are described in a progressive manner, and identical or similar portions between the various embodiments may be cross-referenced, with each embodiment focusing on the differences from other embodiments. For device embodiments, relevant portions may be referred to in the description of the method embodiments. The embodiments of the present application are not limited to the specific steps and structures described above and shown in the drawings. Those skilled in the art may make various changes, modifications, and additions, or change the order between steps, after comprehending the gist of the embodiments of the present application. Moreover, for the sake of brevity, detailed descriptions of known methods and techniques are omitted herein.

The functional blocks shown in the structural block diagrams described above may be implemented as hardware, software, firmware, or a combination thereof. When implemented in a hardware manner, they may be, for example, electronic circuits, application-specific integrated circuits (ASICs), appropriate firmware, plug-in units, functional cards, or the like. When implemented in a software manner, the elements of the embodiments of the present application are programs or code segments for performing required tasks. The programs or code segments may be stored in a machine-readable medium, or transmitted on a transmission medium or a communication link via a data signal carried in a carrier wave. A "machine-readable medium" may include any medium capable of storing or transmitting information. Examples of machine-readable media include electronic circuits, semiconductor memory devices, ROM, flash memory, erasable ROM (EROM), floppy disks, CD-ROMs, optical discs, hard disks, fiber optic media, radio frequency (RF) links, and the like. The code segments may be downloaded via computer networks such as the Internet, an intranet, or the like.

Those skilled in the art should understand that the above embodiments are illustrative and not restrictive. Different technical features appearing in different embodiments may be combined to achieve advantageous effects. Those skilled in the art, on the basis of studying the drawings, the description, and the claims, should be able to understand and implement other variations of the disclosed embodiments. In the claims, the term "comprising" does not exclude other devices or steps; when an item is not modified by a quantifier, it is intended to include one or more items, and may be used interchangeably with "one or more items"; the terms "first" and "second" are used to denote names rather than to indicate any particular sequence. Any reference signs in the claims shall not be construed as limiting the scope of protection. The functions of multiple portions appearing in the claims may be implemented by a single hardware or software module. The appearance of certain technical features in different dependent claims does not mean that these technical features cannot be combined to achieve advantageous effects.

## Claims

1. A method for suppressing blade vibration, comprising:
acquiring one or more first blade vibration parameters under an operating condition where a yaw fault occurs in a wind turbine;
determining whether one or more blades are in an aerodynamic vibration state based on the one or more first blade vibration parameters; and
controlling the wind turbine to enter a motor operating mode in response to the one or more blades being in the aerodynamic vibration state,
wherein in the motor operating mode, a generator of the wind turbine outputs electromagnetic torque to drive a rotor to rotate to enable the one or more blades to exit the aerodynamic vibration state.

2. The method according to claim 1, wherein the one or more first blade vibration parameters comprise: a nacelle acceleration and blade accelerations corresponding to a plurality of the blades; and
determining whether the one or more blades are in an aerodynamic vibration state based on the one or more first blade vibration parameters comprise:
determining whether a blade acceleration corresponding to any one of the one or more blades or the nacelle acceleration is greater than a corresponding first acceleration threshold; and
determining that the one or more blades are in the aerodynamic vibration state in response to the blade acceleration corresponding to any one of the one or more blades or the nacelle acceleration being greater than the corresponding first acceleration threshold.

3. The method according to claim 1, wherein the wind turbine comprises a semi-direct drive wind turbine, which comprises a first converter, the first converter being disposed between a power grid and a generator stator; and
the controlling the wind turbine to enter a motor operating mode comprises:
sequentially starting a grid-side power module and a machine-side power module of the first converter to enable the wind turbine to enter the motor operating mode.

4. The method according to claim 1, wherein the wind turbine comprises a doubly-fed wind turbine, which comprises a second converter, a grid-connected contactor, and a short-circuit contactor, the second converter being disposed between a power grid and a generator rotor, a moveable contact set of the grid-connected contactor being connected to the power grid, and a stationary contact set of the grid-connected contactor being connected to a generator stator and a moveable contact set of the short-circuit contactor;
the controlling the wind turbine to enter a motor operating mode comprises:
closing the short-circuit contactor to disconnect an electrical connection between the power grid and the generator stator; and
sequentially starting a grid-side power module and a machine-side power module of the second converter to cause the wind turbine to enter the motor operating mode.

5. The method according to claim 1, wherein, after controlling the wind turbine to enter a motor operating mode, the method further comprises:
acquiring one or more second blade vibration parameters;
determining whether the one or more blades have exited the aerodynamic vibration state based on the one or more second blade vibration parameters; and
controlling the wind turbine to exit the motor operating mode in response to the one or more blades having exited the aerodynamic vibration state.

6. The method according to claim 5, wherein the one or more second blade vibration parameters comprise: a nacelle acceleration and blade accelerations corresponding to a plurality of the blades;
the determining whether the one or more blades have exited the aerodynamic vibration state based on the one or more second blade vibration parameters comprises:
determining whether the blade accelerations corresponding to all the blades and the nacelle acceleration are each less than corresponding second acceleration thresholds; and
determining that the one or more blades have exited the aerodynamic vibration state in response to the blade accelerations corresponding to all the blades and the nacelle acceleration each being less than the corresponding second acceleration thresholds.

7. The method according to claim 5, wherein the wind turbine comprises a semi-direct drive wind turbine, which comprises a first converter disposed between a power grid and a generator stator; and
the controlling the wind turbine to exit the motor operating mode comprises:
sequentially turning off a machine-side power module and a grid-side power module of the first converter to cause the wind turbine to exit the motor operating mode.

8. The method according to claim 5, wherein the wind turbine comprises a doubly-fed wind turbine, which comprises a second converter, a grid-connected contactor, and a short-circuit contactor, the second converter being disposed between a power grid and a generator rotor, a moveable contact set of the grid-connected contactor being connected to the power grid, and a stationary contact set of the grid-connected contactor being connected to a generator stator and a moveable contact set of the short-circuit contactor;
the controlling the wind turbine to exit the motor operating mode comprises:
sequentially turning off a machine-side power module and a grid-side power module of the second converter, and opening the short-circuit contactor to cause the wind turbine to exit the motor operating mode.

9. A controller, comprising:
a processor; and
a memory,
wherein the memory stores a computer program, which implements, when executed by the processor, the method for suppressing blade vibration according to any one of claims 1 to 8.

10. A computer-readable storage medium, wherein the computer-readable storage medium stores computer instructions, the computer instructions being configured to cause a computer to execute the method for suppressing blade vibration according to any one of claims 1 to 8.

11. A semi-direct drive wind turbine, comprising: a first converter and the controller according to claim 9, the first converter being disposed between a power grid and a generator stator.

12. A doubly-fed wind turbine, comprising: a second converter, a grid-connected contactor, a short-circuit contactor, and the controller according to claim 9;
wherein the second converter is disposed between a power grid and a generator rotor , a moveable contact set of the grid-connected contactor is connected to the power grid, and a stationary contact set of the grid-connected contactor is connected to a generator stator and a moveable contact set of the short-circuit contactor.
